# EUROPEAN PATENT SPECIFICATION

(11) **EP 4 243 138 B1**
(45) Date of publication and mention of the grant of the patent: **25.02.2026**
(21) Application number: 22881362.2
(22) Date of filing: 13.10.2022
(51) Int. Cl.: H01M 10/04, H01M 10/44, H02J 7/00

(54) **PRESSURIZING CHANNEL AND SECONDARY BATTERY CHARGING/DISCHARGING DEVICE COMPRISING SAME**
DRUCKBEAUFSCHLAGUNGSKANAL UND SEKUNDÄRBATTERIELADE-/-ENTLADEVORRICHTUNG DAMIT
CANAL DE PRESSURISATION ET DISPOSITIF DE CHARGE/DÉCHARGE DE BATTERIE SECONDAIRE LE COMPRENANT

(30) Priority: 15.10.2021 KR 20210137447
(43) Date of publication of application: 13.09.2023
(73) Proprietor: LG Energy Solution, Ltd., Seoul 07335 (KR)
(72) Inventor: LEE, Hak Sik, Daejeon 34122 (KR); KIM, Jun Wan, Daejeon 34122 (KR)
(74) Representative: Goddar, Heinz J.
(86) International application number: PCT/KR2022/015469
(87) International publication number: WO 2023/063735

(56) References cited:
- JP-A- 2006 252 831
- JP-A- 2016 004 724
- JP-A- 2016 004 724
- JP-A- 2019 075 350
- JP-B1- 6 490 287
- KR-A- 20180 044 100
- KR-A- 20190 056 984
- KR-B1- 102 169 162

## Description

### [Technical Field]

This application claims the benefit of a priority based on Korean Patent Application No. 10-2021-0137447, filed on October 15, 2021.

The present invention relates to a pressurized channel and an apparatus for charging and discharging a secondary battery comprising the same.

### [Background Technology of the Invention]

Generally, secondary batteries can be classified into cylindrical, prismatic, pouch-type, etc. depending on its shape. Among them, the pouch-type secondary battery, because its exterior is made up of exterior materials that is composed of a metal layer(foil) and a synthetic resin multilayer that is coated on the lower and upper surface of the metal layer, allows light weighting of a battery by significantly reducing the weight of the battery compared to a cylindrical or a prismatic battery which uses a metal can. A pouch-type battery is also drawing a lot of attention by having an advantage of being able to change into diverse forms.

Such pouch-type secondary battery is stored with an electrode assembly in a layered form. The electrode assembly is connected with an electrode tab and an electrode lead, and the electrode lead is protruded from the pouch exterior material. Such electrode lead is supplied with electric power from external device by being electrically connected to the external device through contact.

A pouch-type secondary battery is manufactured through a process of assembling the cell and activating the battery, and in the battery activation process, the secondary battery cell is loaded to an apparatus for charging and discharging, then the charging-discharging is carried out under necessary conditions for battery activation. As such, the process of carrying out charging-discharging using the apparatus for charging and discharging for battery activation is called a formation process.

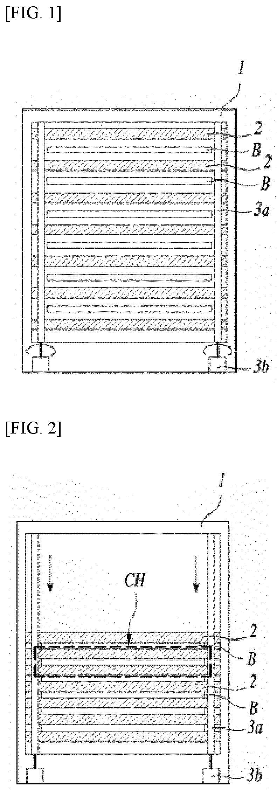

By referring to FIG.1 and FIG.2, an apparatus for charging and discharging a secondary battery according to conventional art used in formation process is explained. FIG. 1 and FIG. 2 are a drawing that illustrates the apparatus for charging and discharging a secondary battery according to the conventional art.

Referring to FIG. 1 and FIG. 2, the apparatus for charging and discharging a secondary battery according to conventional art includes a frame 1, a pressurized plate 2, and a driving part 3(3a,3b). The driving part 3 includes a drive shaft 3a and a drive motor 3b.

Inside frame 1, multiple pressurized plates 2 are placed, and a secondary battery B that carries out the formation process is placed between the pressurized plate 2 and the pressurized plate 2.

As illustrated in FIG. 1, when the driving shaft 3a rotates after the driving motor 3b starts rotating, the multiple pressurized plates 2 that are intermeshed move in one direction, and as shown in FIG. 2, the pressurized plates 2 pressurize both sides of the secondary battery B.

A pair of the pressurized plates 2 that is placed on both sides of the secondary battery B with the secondary battery B interposed therebetween forms a pressurized channel unit CH, and the apparatus for charging and discharging a secondary battery has the multiple pressurized channel units CH. Any one of the pressurized plates 2 forms the pressurized channel unit CH and a pressurized channel unit adjacent to it. That is, two adjacent pressurized channels have a structure of sharing one pressurized plate.

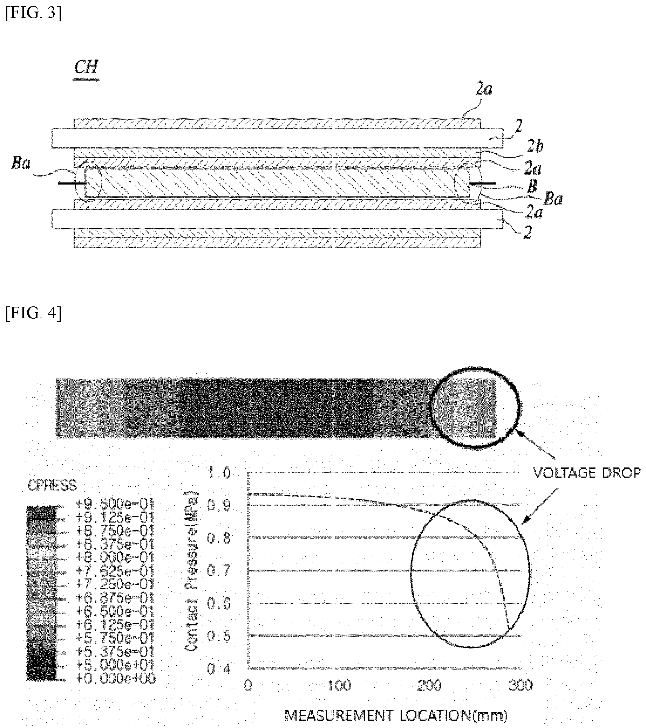

FIG. 3 is a cross-sectional view that illustrates a single pressurized channel unit that forms the apparatus for charging and discharging a secondary battery according to the conventional art.

The pressurized channel CH includes a pressurized plate 2, a heating pad 2b that is formed on one side of the pressurized plate, and a silicone pad 2a that is formed on both sides of the pressurized plate on which the heating pad 2b is formed. The secondary battery B is interposed between a pair of opposing pressurized plates 2.

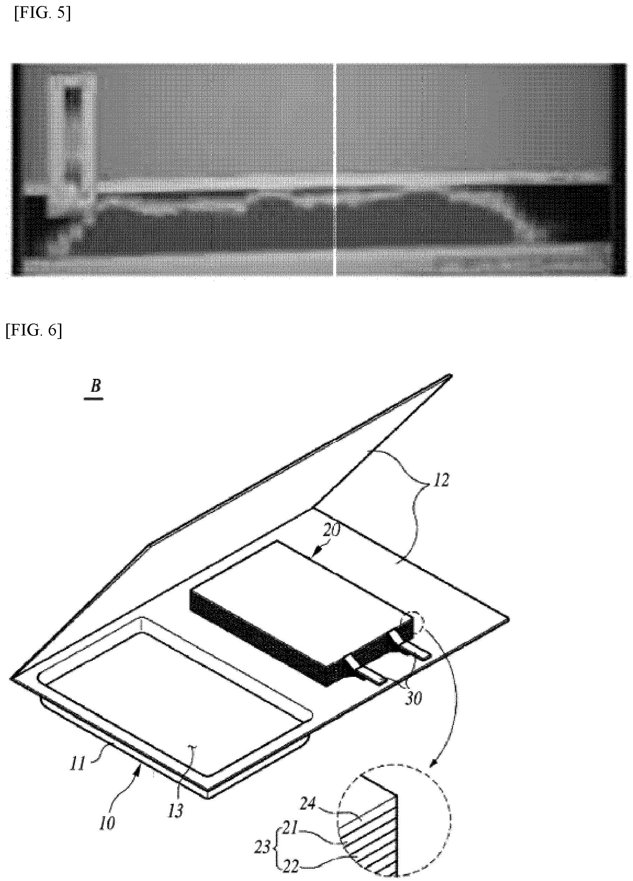

FIG. 4 is a graph for explaining problems caused by the apparatus for charging and discharging a secondary battery according to the conventional art, and FIG. 5 is an image showing the problems caused by the apparatus for charging and discharging a secondary battery according to the conventional art.

By referring to FIG. 4 and FIG. 5, it can be known that when a formation process is carried out by the apparatus for charging and discharging a secondary battery of the conventional art, pressure non-uniformity may occur on both ends Ba of the secondary battery B.

Specifically, by referring to FIG. 4, when the position of one end is 300mm from the middle (origin 0) of the secondary battery, it can be known that a sharp decline in the voltage occurs at 200mm point. In addition, by referring to FIG. 5, it can be known that the sharp decline occurs at both ends of the secondary battery where formation process is carried out by the apparatus for charging and discharging a secondary battery of the conventional art.

Such a pressure non-uniformity causes a quality degradation phenomenon such as lithium being precipitated. Such pressure non-uniformity is caused by the thickness deviation in the electrical field direction, and the apparatus for charging and discharging a secondary battery of the conventional art is currently not able to sufficiently compensate for this.

KR 2018 0044100 A describes a pressurization activation process facility capable of changing a temperature during processes. The pressurization activation process facility is a pressurization activation process facility for inserting a secondary battery between at least one pair of pressurizing blocks opposed to each other in a secondary cell activation process and pressing the secondary battery at both sides, wherein a heating plate for heating the secondary battery is formed on one surface of a pressurization block, and a cooling flow path, through which a refrigerant for cooling the secondary battery passes, is formed in the pressurization block.

### [Description of the Invention]

### [Technical Problem]

The present invention is directed to providing a pressurized channel that can improve pressure drop in both ends of the secondary battery during the formation process and providing an apparatus for charging and discharging a secondary battery that includes the pressurized channel.

### [Technical Solution]

The pressurized channel according to an exemplary embodiment of present invention includes a pair of pressurized plates disposed on both sides of the secondary battery with the secondary battery interposed therebetween. The pressurized plate includes: a body part formed with a material that has a first coefficient of thermal expansion; and an exterior part that connects to both ends of the body part and includes a thermal expansion part containing a material that has a second coefficient of thermal expansion, which is greater than the first coefficient of thermal expansion.

The pressurized channel according to an exemplary embodiment of the present invention may include a heating pad that is formed on at least one side of the pressurized plate, and a silicone pad that is formed on both sides of the pressurized plate on which the heating pad is formed.

In the pressurized channel according to an exemplary embodiment of the present invention, in the case where the material that has a first coefficient of thermal expansion is aluminum, the material that has a second coefficient of thermal expansion may be formed of a composite containing at least one or more materials selected from magnesium, zinc, tin, cadmium, lead, paraffin, and rubber.

The pressurized channel according to an exemplary embodiment of the present invention, assuming that the middle of the pressurized plate is the origin 0 and that the end of one side is 1, an exterior part or a thermal expansion part may be formed at a position 2/3 or more from the origin 0 of the pressurized plate toward the one side end.

In the pressurized channel according to an exemplary embodiment of the present invention, the exterior part may have an inserting space into which the thermal expansion part is inserted.

The apparatus for charging and discharging a secondary battery according to an exemplary embodiment of the present invention includes a frame that accommodates multiple secondary batteries on the inside; and multiple pressurized channels, which include a pair of pressurized plates installed inside the frame and disposed on both sides of one of the multiple secondary batteries with the one of the multiple secondary batteries interposed between the pair of pressurized plates. The pressurized plate includes: a body part formed with a material that has a first coefficient of thermal expansion; and an exterior part that connects to both ends of the body part and includes a thermal expansion part containing a material that has a second coefficient of thermal expansion, which is greater than the first coefficient of thermal expansion.

The apparatus for charging and discharging a secondary battery according to an exemplary embodiment of the present invention may include a heating pad that is formed on at least one side of the pressurized plate, and a silicone pad that is formed on both sides of the pressurized plate which has the heating pad already formed.

In the apparatus for charging and discharging a secondary battery according to an exemplary embodiment of the present invention, in the case where the material that has a first coefficient of thermal expansion is aluminum, the material that has a second coefficient of thermal expansion may be formed of a composite containing at least one or more materials selected from magnesium, zinc, tin, cadmium, lead, paraffin, and rubber.

The apparatus for charging and discharging a secondary battery according to an exemplary embodiment of the present invention, assuming that the middle of the pressurized plate is the origin 0 and that the end of one side is 1, the exterior part or the thermal expansion part may be formed at a position 2/3 or more from the origin 0 of the pressurized plate in the direction toward one side end of the pressurized plate.

In the apparatus for charging and discharging a secondary battery according to an exemplary embodiment of the present invention, the exterior part may have an inserting space into which the thermal expansion part is inserted.

Other details of the exemplary embodiments based on various aspects of the present invention are included in the detailed explanation below.

### [Advantageous Effects]

According to an exemplary embodiment of the present invention, it is possible to improve pressure drop at both ends of the secondary battery that occurs during the formation process.

### [Brief Description of the Drawings]

FIG. 1 and FIG. 2 are drawings illustrating an apparatus for charging and discharging a secondary battery according to the conventional art.
FIG. 3 is a cross-sectional view that illustrates a single pressurized channel unit that forms the apparatus for charging and discharging a secondary battery according to the conventional art.
FIG. 4 is a graph for explaining problems caused by the apparatus for charging and discharging a secondary battery according to the conventional art.
FIG. 5 is an image showing the problems caused by the apparatus for charging and discharging a secondary battery according to the conventional art.
FIG. 6 is an exploded perspective view illustrating a secondary battery applied to the apparatus for charging and discharging a secondary battery according to an exemplary embodiment of present invention.
FIG. 7 is a cross-sectional view illustrating a single pressurized channel unit that forms the apparatus for charging and discharging a secondary battery according to an exemplary embodiment of the present invention.
FIG. 8 is a drawing conceptually illustrating the exterior part of the pressurized plate expanding as the thermal expansion part expands due to heat.
FIG. 9 is a drawing conceptually illustrating the process of voltage drop on both ends of the secondary battery being prevented by the pressurized channel according to an exemplary embodiment of the present invention.
FIG. 10 is an exploded perspective view illustrating pressurized plate that forms the pressurized channel unit according to another exemplary embodiment of the present invention.

### [Best Mode for Carrying Out the invention]

The present invention may have various modifications and various examples, and thus specific examples are illustrated in the drawings and described in detail in the detailed description. However, it should be understood that the present invention is not limited to specific embodiments, and includes all modifications, equivalents or alternatives within the spirit and technical scope of the present invention.

The terms that the present invention use are only used to explain a specific example and is not intended to limit thereto. A singular expression includes a plural expression unless the context indicates otherwise. The terms "comprise," "include" and "have" used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

First, the secondary battery will be described by referring to FIG. 6. FIG. 6 is an exploded perspective view illustrating the secondary battery applied to the apparatus for charging and discharging a secondary battery according to an exemplary embodiment of the present invention.

Referring to FIG. 6, the secondary battery B includes a battery case 10, an electrode assembly 20 that is accommodated at the accommodating part 13 of the battery case 10, and an electrolyte. Here, an electrode assembly 30 may include an electrode lead 30 that is electrically connected to the electrode 23.

As a power plant capable of charging and discharging, the electrode assembly 20 can be formed by alternatively layering an electrode 23 and a separation membrane 24.

The electrode 23 may be composed of a cathode 21 and an anode 22. Here, the electrode assembly 20 may form a structure where the cathode 21/the separation membrane 24/the anode 22 are alternatively stacked. And the electrode lead 30 may include a cathode lead that connects to the cathode 21 and an anode lead that connects to the anode 22. In FIG. 6, the electrode lead is illustrated as being formed in one direction of the electrode assembly 20, but it can also be formed in both directions of the electrode assembly 20.

The cathode 21 may include a cathode current collector and a cathode active material stacked on the cathode current collector. The cathode current collector may be made of an aluminum foil. The cathode active material may be formed of lithium manganese oxide, lithium cobalt oxide, lithium nickel oxide, lithium iron phosphate, or a compound or a mixture containing one or more of these.

The anode 22 may include an anode current collector and an anode active material layered on the anode current collector. The anode current collector may be made of a foil made of, for example, a copper material. The anode active material may be a compound or a mixture that includes a graphite-based material.

The separation membrane 24 electrically insulates between the cathode 21 and the anode 22 by being made of an electrically insulating material. The separation membrane can be formed of microporous polyolefin-based resin film such as polyethylene and polypropylene.

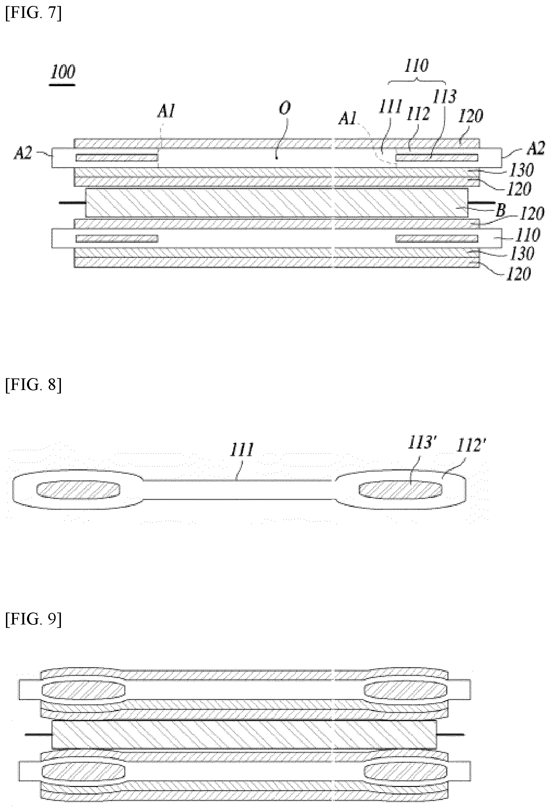

Next, a pressurized channel according to an exemplary embodiment of the present invention will be explained by referring to FIG. 7 through FIG. 9. FIG. 7 is a cross-sectional view illustrating a single pressurized channel unit that forms the apparatus for charging and discharging a secondary battery according to an exemplary embodiment of the present invention, FIG. 8 is a drawing conceptually illustrating the exterior part of the pressurized plate expanding as the thermal expansion part expands due to heat, and FIG. 9 is a drawing conceptually illustrating the process of voltage drop on both ends of the secondary battery being prevented by the pressurized channel according to an embodiment of the present invention.

As illustrated in FIG. 7, the pressurized channel 100 according to an exemplary embodiment of the present invention includes a pressurized plate 110, a silicone pad 120, and a heating pad 130.

The heating pad 130 is formed on at least one side of the pressurized plate 110 to supply heat to the pressurized plate 110. The silicone pad 120 is formed on both sides of the pressurized plate 110 on which the heating pad 130 is formed to pressurize the secondary battery B.

A pair of pressurized plates is disposed on both sides of the secondary battery with the secondary battery interposed between the pair of pressured plates. Here, "disposed on both sides" may include a state of being either spaced apart from both sides of the secondary battery B or in contact with both sides of the secondary battery B. During the formation process, when the pressurized plate 110 pressurizes the secondary battery B, a pair of pressurized plate 110 is in a state of being in contact with both sides of the secondary battery B, and if the pressure is released, a pair of pressurized plate 110 is in a state of being spaced apart from both sides of the secondary battery B.

Specifically, the pressurized plate 110 includes a body part 111 and an exterior part 112, and the exterior part 112 includes a thermal expansion part 113. In the following description, the body part 111 and the exterior part 112 are described as separate sections, but in practice, body part 111 and exterior part 112 represents one section of the pressurized plate 110, respectively.

The body part 111 is the middle section of the pressurized plate 110 where there is relatively less voltage drop occurring in the secondary battery B during the formation process. Body part 111 is formed over a predetermined length section (O ~ A1) in the direction of both ends of the pressurized plate 110 (O - A2 direction) with the middle of the pressurized plate 110 as the origin O.

The end A1 of the body part 111 is where sharp decline in voltage of the secondary battery B occurs, and by referring to the above-mentioned FIG. 4 and FIG. 5, it can be known that the position of the end A1 of the body part 111 is approximately 2/3 of the distance from the origin O of the pressurized plate 110 to the one end A2 of the pressurized place 110.

Accordingly, the exterior part 112 that forms connection with the body part 111 is formed in a position greater than or equal to 2/3 in the direction towards one end of the pressurized plate 110 from the origin O. The thermal expansion part 113 formed in the exterior part 112 is also formed at a position approximately 2/3 or more from the origin O of the pressurized plate in the direction toward on end of the pressurized plate 110.

The exterior part 112 is an outer region of the pressurized plate 110 where sharp drop in voltage of the secondary battery B occurs during the formation process. Referring to above-mentioned FIG.4 and FIG. 5, the exterior part 112 is formed over the section from the end A1 of body part 111 to the one end A2 of the pressurized plate 110. That is, the exterior part 112 covers the predetermined length area (A1 ~ A2).

The body part 111 and the exterior part 112, as an individual section of the pressurized plate 110, may be formed of the same material. The body part 111 and the exterior part 112 may be formed of a metal that has a first coefficient of thermal expansion. The metal with first coefficient of thermal expansion, for example, may be aluminum.

The exterior part 112 includes a thermal expansion part 113. The exterior part 112 may be formed in a shape which wraps around the thermal expansion part 113. The thermal expansion part 113 contains a material that has a second coefficient of thermal expansion, which has a greater coefficient of thermal expansion compared to the material that comprises the body part 111 and the exterior part 112. A material that has a second coefficient of thermal expansion, for example, may be magnesium, zinc, tin, cadmium, lead, etc. In addition, a material that has a second coefficient of thermal expansion may be a nonmetal such as paraffin, rubber, etc.

When the body part 111 and the exterior part 112 is formed of an aluminum, the thermal expansion part 113 may be formed of an alloy that contains at least one or more of the materials selected from magnesium, zinc, tin, cadmium, lead, etc. In addition, the thermal expansion part 113 may be formed of a composite that contains at least one or more of the materials selected from paraffin and rubber. Moreover, depending on the choice, the thermal expansion part may be formed of a composite that contains at least one or more of the materials selected from magnesium, zinc, tin, cadmium, lead, paraffin, and rubber.

More specifically, the thermal expansion part 113 is preferably an alloy or a composite capable of volume expansion of approximately 55 ~ 65µm under a formation process temperature condition (approximately 60°C).

During the formation process, such thermal expansion part 113 thermally expands more rapidly than the body part 111 and the exterior part 112. As the thermal expansion part 113 gets expanded, the exterior part that wraps around the thermal expansion part 113 also gets expanded (please refer to 112' and 113' of FIG. 8).

Furthermore, as illustrated in FIG. 9, the heating pad and the silicone pad formed in the exterior part 112 region also get expanded to compensate for the thickness deviation of both ends of the secondary battery B, solving the pressure non-uniformity.

Meanwhile, the apparatus for charging and discharging a secondary battery according to an exemplary embodiment of the present invention only differs in the configuration of the pressurized channel unit CH, and the rest of the configuration is substantially the same as the configuration of FIG. 1 and FIG. 2, so a repeated explanation will be omitted.

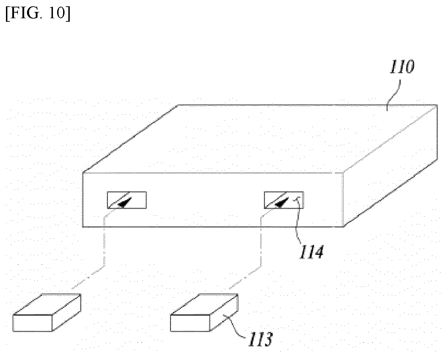

Next, by referring to FIG. 10, a pressurized plate that forms a pressurized channel unit according to another embodiment of the present invention will be explained. FIG. 10 is an exploded perspective view illustrating a pressurized plate that forms the pressurized channel unit according to another embodiment of present invention.

By referring to FIG. 10, it can be known that the exterior part 112 of the pressurized plate 110 may include an inserting space 114 where the above-mentioned thermal expansion part 113 is inserted.

The thermal expansion part 113 can be manufactured to include many different coefficients of thermal expansion by synthesizing various metals/nonmetals. Therefore, according to the change in processing temperature condition or the change in difference in the thickness of both ends of the secondary battery B, it may be possible to cope actively with the various changes in processing conditions by alternatively inserting a thermal expansion part 113 with an appropriate coefficient of thermal expansion.

### [Reference Numerals]

100: PRESSURIZED CHANNEL
110: PRESSURIZED PLATE
111: BODY PART
112: EXTERIOR PART
113: THERMAL EXPANSION PART
120: SILICONE PAD
130: HEATING PAD

## Claims

1. A pressurized channel (100) comprises:
a pair of pressurized plates (2) configured to be disposed on both sides of a secondary battery with the secondary battery interposed between the pair of pressurized plates (2),
and the pressurized plate (2) comprises:
a body part (111) formed with a material that has a first coefficient of thermal expansion,
**characterized in that** the pressurized plate (2) further comprises an exterior part (112) that connects to both ends of the body part (111) and includes a thermal expansion part (113) containing a material that has a second coefficient of thermal expansion, which is greater than the first coefficient of thermal expansion.

2. The pressurized channel (100) of claim 1, wherein the pressurized channel (100) further includes:
a heating pad (130) that is formed on at least one side of the pressurized plate (2),
and a silicone pad (120) that is formed on both sides of the pressurized plate (2) on which the heating pad (130) is formed.

3. The pressurized channel (100) of claim 1, wherein
in the case where the material that has a first coefficient of thermal expansion is aluminum, the material that has a second coefficient of thermal expansion is formed of a composite containing at least one or more materials selected from magnesium, zinc, tin, cadmium, lead, paraffin, and rubber.

4. The pressurized channel (100) of claim 1, wherein
assuming that the middle of the pressurized plate (2) is the origin 0 and that the end of one side is 1, the exterior part (112) or the thermal expansion part (113) is formed at a position 2/3 or more from the origin of the pressurized plate (2) in the direction toward one side end of the pressurized plate (2).

5. The pressurized channel (100) of claim 1, wherein
the exterior part (112) has an inserting space into which the thermal expansion part (113) is inserted.

6. An apparatus for charging and discharging a secondary battery comprises:
a frame that accommodates multiple secondary batteries on the inside; and
multiple pressurized channels (100) according to claim 1.

7. The apparatus for charging and discharging a secondary battery of claim 6, further comprises,
a heating pad (130) that is formed on at least one side of the pressurized plate (2),
and a silicone pad (120) that is formed on both sides of the pressurized plate (2) on which the heating pad (130) is formed.

8. The apparatus for charging and discharging a secondary battery of claim 6, wherein
in the case where the material that has a first coefficient of thermal expansion is aluminum, the material that has a second coefficient of thermal expansion is formed of a composite containing at least one or more materials selected from magnesium, zinc, tin, cadmium, lead, paraffin, and rubber.

9. The apparatus for charging and discharging a secondary battery of claim 6, wherein assuming that the middle of the pressurized plate (2) is the origin o and that the end of one side is 1, the exterior part (112) or the thermal expansion part (113) is formed at a position 2/3 or more from the origin o of the pressurized plate (2) in the direction toward one side end of the pressurized plate (2).

10. The apparatus for charging and discharging a secondary battery of claim 6, wherein
the exterior part (112) has an inserting space into which the thermal expansion part (113) is inserted.

## Patentansprüche

1. Druckbeaufschlagter Kanal (100) aufweisend:
ein Paar druckbeaufschlagter Platten (2), die konfiguriert sind, um auf beiden Seiten einer Sekundärbatterie angeordnet zu werden, wobei die Sekundärbatterie zwischen dem Paar druckbeaufschlagter Platten (2) angeordnet ist,
und die druckbeaufschlagte Platte (2) aufweist:
ein Körperteil (111), das aus einem Material gebildet ist, das einen ersten Wärmeausdehnungskoeffizienten aufweist,
**dadurch gekennzeichnet, dass** die druckbeaufschlagte Platte (2) ferner ein äußeres Teil (112) aufweist, das mit beiden Enden des Körperteils (111) verbunden ist und ein Wärmeausdehnungsteil (113) aufweist, das ein Material enthält, das einen zweiten Wärmeausdehnungskoeffizienten aufweist, der größer als der erste Wärmeausdehnungskoeffizient ist.

2. Druckbeaufschlagter Kanal (100) nach Anspruch 1, wobei der druckbeaufschlagte Kanal (100) ferner aufweist:
ein Heizkissen (130), das auf mindestens einer Seite der druckbeaufschlagten Platte (2) gebildet ist,
und ein Silikonkissen (120), das auf beiden Seiten der druckbeaufschlagten Platte (2) gebildet ist, auf dem das Heizkissen (130) gebildet ist.

3. Druckbeaufschlagter Kanal (100) nach Anspruch 1, wobei
in dem Fall, in dem das Material, das einen ersten Wärmeausdehnungskoeffizienten aufweist, Aluminium ist, das Material, das einen zweiten Wärmeausdehnungskoeffizienten aufweist, aus einem Verbundstoff gebildet ist, der mindestens ein oder mehrere Materialien enthält, die aus Magnesium, Zink, Zinn, Cadmium, Blei, Paraffin und Gummi ausgewählt sind.

4. Druckbeaufschlagter Kanal (100) nach Anspruch 1, wobei
unter der Annahme, dass die Mitte der druckbeaufschlagten Platte (2) der Ursprung o ist und dass das Ende einer Seite 1 ist, das äußere Teil (112) oder das Wärmeausdehnungsteil (113) an einer Position 2/3 oder mehr von dem Ursprung der druckbeaufschlagten Platte (2) in der Richtung zu einem Seitenende der druckbeaufschlagten Platte (2) gebildet ist.

5. Druckbeaufschlagter Kanal (100) nach Anspruch 1, wobei
das äußere Teil (112) einen Einsetzraum aufweist, in den das Wärmeausdehnungsteil (113) eingesetzt ist.

6. Vorrichtung zum Laden und Entladen einer Sekundärbatterie aufweisend:
einen Rahmen, der mehrere Sekundärbatterien auf der Innenseite aufnimmt; und
mehrere druckbeaufschlagte Kanäle (100) nach Anspruch 1.

7. Vorrichtung zum Laden und Entladen einer Sekundärbatterie nach Anspruch 6, ferner aufweisend:
ein Heizkissen (130), das auf mindestens einer Seite der druckbeaufschlagten Platte (2) gebildet ist,
und ein Silikonkissen (120), das auf beiden Seiten der druckbeaufschlagten Platte (2) gebildet ist, auf dem das Heizkissen (130) gebildet ist.

8. Vorrichtung zum Laden und Entladen einer Sekundärbatterie nach Anspruch 6, wobei
in dem Fall, in dem das Material, das einen ersten Wärmeausdehnungskoeffizienten aufweist, Aluminium ist, das Material, das einen zweiten Wärmeausdehnungskoeffizienten aufweist, aus einem Verbundstoff gebildet ist, der mindestens ein oder mehrere Materialien enthält, die aus Magnesium, Zink, Zinn, Cadmium, Blei, Paraffin und Gummi ausgewählt sind.

9. Vorrichtung zum Laden und Entladen einer Sekundärbatterie nach Anspruch 6, wobei unter der Annahme, dass die Mitte der druckbeaufschlagten Platte (2) der Ursprung p ist und dass das Ende einer Seite 1 ist, das äußere Teil (112) oder das Wärmeausdehnungsteil (113) an einer Position 2/3 oder mehr von dem Ursprung o der druckbeaufschlagten Platte (2) in der Richtung zu einem Seitenende der druckbeaufschlagten Platte (2) gebildet ist.

10. Vorrichtung zum Laden und Entladen einer Sekundärbatterie nach Anspruch 6, wobei
das äußere Teil (112) einen Einsetzraum aufweist, in den das Wärmeausdehnungsteil (113) eingesetzt ist.

## Revendications

1. Conduit sous pression (100) comprenant :
une paire de plaques sous pression (2) configurées pour être disposées des deux côtés d'une batterie secondaire, la batterie secondaire étant intercalée entre la paire de plaques sous pression (2),
et la plaque sous pression (2) comprenant :
un élément de corps (111) formé avec un matériau présentant un premier coefficient d'expansion thermique,
**caractérisé en ce que** la plaque sous pression (2) comprend en outre un élément extérieur (112) se raccordant aux deux bouts de l'élément de corps (111), et comprend un élément d'expansion thermique (113) contenant un matériau présentant un deuxième coefficient d'expansion thermique supérieur au premier coefficient d'expansion thermique.

2. Conduit sous pression (100) selon la revendication 1, le conduit sous pression (100) comprenant en outre :
un tampon chauffant (130) formé sur au moins un côté de la plaque sous pression (2),
et un tampon de silicone (120) formé sur les deux côtés de la plaque sous pression (2) sur laquelle le tampon chauffant (130) est formé.

3. Conduit sous pression (100) selon la revendication 1,
dans le cas où le matériau présentant un premier coefficient d'expansion thermique est de l'aluminium, le matériau présentant un deuxième coefficient d'expansion thermique est formé avec un composite contenant au moins un ou plusieurs matériaux sélectionnés parmi les suivants : magnésium, zinc, étain, cadmium, plomb, paraffine et caoutchouc.

4. Conduit sous pression (100) selon la revendication 1, dans lequel
en supposant que le milieu de la plaque sous pression (2) soit l'origine 0 et que le bout d'un côté soit 1, la partie extérieure (112) ou la partie de dilatation thermique (113) est formée dans une position à 2/3 ou davantage de l'origine de la plaque sous pression (2) dans le direction d'une extrémité latérale de la plaque sous pression (2).

5. Conduit sous pression (100) selon la revendication 1,
la partie extérieure (112) possédant un espace d'insertion dans lequel est insérée la partie de dilatation thermique (113).

6. Appareil pour charger et décharger une batterie secondaire, comprenant :
un bâti pouvant recevoir plusieurs batteries secondaires à l'intérieur ; et
plusieurs conduits sous pression (100) selon la revendication 1.

7. Appareil pour charger et décharger une batterie secondaire selon la revendication 6, comprenant en outre :
un tampon chauffant (130) formé sur au moins un côté de la plaque sous pression (2),
et un tampon de silicone (120) formé sur les deux côtés de la plaque sous pression (2) sur laquelle le tampon chauffant (130) est formé.

8. Appareil pour charger et décharger une batterie secondaire selon la revendication 6,
dans le cas où le matériau présentant un premier coefficient d'expansion thermique est de l'aluminium, le matériau présentant un deuxième coefficient d'expansion thermique est formé avec un composite contenant au moins un ou plusieurs matériaux sélectionnés parmi les suivants : magnésium, zinc, étain, cadmium, plomb, paraffine et caoutchouc.

9. Appareil pour charger et décharger une batterie secondaire selon la revendication 6,
en supposant que le milieu de la plaque sous pression (2) soit l'origine 0 et que le bout d'un côté soit 1, la partie extérieure (112) ou la partie de dilatation thermique (113) est formée dans une position à 2/3 ou davantage de l'origine 0 de la plaque sous pression (2) dans le direction vers une extrémité latérale de la plaque sous pression (2).

10. Appareil pour charger et décharger une batterie secondaire selon la revendication 6,
la partie extérieure (112) possédant un espace d'insertion dans lequel est insérée la partie de dilatation thermique (113).
